# FASCICULE DE BREVET EUROPEEN

(11) **EP 0 615 953 B1**
(45) Date de publication et mention de la délivrance du brevet: **10.06.1998**
(21) Numéro de dépôt: 94400531.3
(22) Date de dépôt: 11.03.1994
(51) Int. Cl.: C01B 25/36, C04B 35/00, C04B 12/02, C04B 22/16, C04B 28/34

(54) **Phosphate d'aluminium, son procédé de préparation et son utilisation dans la préparation de matériaux comprenant un liant et de pièces céramiques**
Aluminiumsphosphat, Verfahren zu seiner Herstellung sowie seine Verwendung zur Herstellung von bindemittelhaltigen Materialien und keramischen Teilen
Aluminium phosphate, process for its preparation and its use in the preparation of materials containing a binder and ceramic parts

(30) Priorité: 17.03.1993 FR 9303063
(43) Date de publication de la demande: 21.09.1994
(73) Titulaire: RHODIA CHIMIE, 92408 Courbevoie Cédex (FR)
(72) Inventeur: Fogel, William, F-30100 Ales (FR); Frouin, Laurent, F-94240 L'Hay les Roses (FR)
(74) Mandataire: Dubruc, Philippe

(56) Documents cités:
- EP-A- 0 265 667
- LU-A- 66 314

## Description

La présente invention concerne un nouveau phosphate d'aluminium, son procédé de préparation, son utilisation dans des compositions et dans la préparation de matériaux comprenant un liant et de pièces céramiques notamment.

On connaît depuis de nombreuses années des liants inorganiques à base de phosphates d'aluminium. En général, il s'agit de lier un composé réfractaire comme Al2O3 ou SiO2 avec un liant essentiellement constitué d'un phosphate acide d'aluminium ou de chrome ou d'acide phosphorique.

Un autre type de liant se prépare par mélange vers 100°C de l'alumine et de l'acide phosphorique selon un rapport molaire Al/P proche de 1. On obtient ainsi une suspension très visqueuse que l'on ne peut sécher que difficilement et dont la mise en oeuvre est de ce fait délicate.

On a par ailleurs cherché à préparer des pièces céramiques "chimiquement liées", c'est à dire obtenues à des températures modérées, par exemple en dessous de 400°C, à partir d'un mélange d'alumine et d'acide phosphorique. Ces mélanges se présentent sous forme d'une pâte dont l'utilisation notamment à l'étape de pressage est délicate.

Il existe donc un besoin de matières premières d'utilisation plus facile pour la préparation de liants ou de pièces céramiques à base de ce type de produits, les pièces devant présenter bien entendu des propriétés mécaniques suffisantes.

L'objet de l'invention est donc la préparation d'un phosphate d'aluminium pouvant être utilisé notamment dans la fabrication de pièces céramiques de bonne résistance mécanique, cette préparation et cette fabrication se faisant dans des conditions de mise en oeuvre plus aisées.

Dans ce but, le procédé de préparation de phosphate d'aluminium selon l'invention est caractérisé en ce qu'on fait réagir au moins un composé d'aluminium avec de l'acide phosphorique ou un phosphate d'aluminium, le milieu réactionnel ne comprenant pas d'anions d'un acide minéral autre que l'acide phosphorique, et on sèche par atomisation ou lyophilisation la suspension obtenue.

En outre l'invention concerne un phosphate d'aluminium caractérisé en ce qu'il est amorphe et qu'il se présente sous forme sèche.

L'invention concerne aussi un phosphate d'aluminium caractérisé en ce qu'il est amorphe et sa surface spécifique BET est d'au plus 25m²/g.

L'invention concerne aussi une composition caractérisée en ce qu'elle comprend un phosphate d'aluminium du type décrit ci-dessus.

L'invention concerne encore un procédé de préparation d'un matériau comprenant un liant caractérisé en ce qu'on utilise à titre de liant un phosphate d'aluminium du type décrit ci-dessus ou du type obtenu par le procédé mentionné plus haut.

Enfin, l'invention concerne un procédé de préparation de pièces céramiques, caractérisé en ce qu'on presse à chaud un phosphate d'aluminium ou une composition du type décrit ci-dessus.

D'autres caractéristiques et détails de l'invention vont maintenant être donnés dans la description et les exemples qui suivent.

Le procédé de préparation du nouveau phosphate d'aluminium de l'invention va tout d'abord être décrit.

Ce procédé comprend dans une première étape une réaction entre au moins un composé d'aluminium et de l'acide phosphorique ou un phosphate d'aluminium.

On peut utiliser tout type d'acide phosphorique, on emploie habituellement un acide dont la concentration varie entre 85% et 75%. On peut utiliser un acide plus dilué.

On peut utiliser aussi comme autre type de réactif un phosphate d'aluminium. Ce phosphate présentera un rapport Al/P inférieur à celui du phosphate que l'on cherche à préparer. En outre, il s'agira d'un orthophosphate. Plus particulièrement, on utilise un orthophosphate acide comme par exemple l'orthophosphate monoaluminique Al(H₂PO₄)₃. Le phosphate d'aluminium utilisé à titre de réactif sera employé généralement sous forme d'une solution, par exemple à 50% dans le cas de l'orthophosphate monoaluminique.

Le composé d'aluminium est choisi parmi les oxydes, hydroxydes et oxyhydroxydes d'aluminium ou leurs mélanges.

Il est à noter que dans le cadre de la présente invention le milieu réactionnel ne comprend pas d'anions d'un acide minéral autre que l'acide phosphorique. On n'utilise donc pas de sels d'aluminium ou, en d'autres termes, on effectue la réaction dans un milieu dans lequel il n'y a ni apport ni présence de sels à l'exception des phosphates d'aluminium.

Selon un mode de réalisation avantageux de l'invention, on utilise comme composé d'aluminium une alumine obtenue par déshydratation rapide des hydroxydes ou oxyhydroxydes d'aluminium.

Ces hydroxydes d'aluminium peuvent être la bayérite, l'hydrargillite ou gibbsite, la nordstrandite. Les oxyhydroxydes peuvent être la boehmite ou le diaspore. La déshydratation peut être opérée dans n'importe quel appareillage approprié à l'aide d'un courant de gaz chauds. La température d'entrée des gaz dans l'appareillage varie généralement de 400 à 1200°C environ et le temps de contact de l'hydroxyde ou l'oxyhydroxyde avec les gaz chauds est généralement compris entre une fraction de seconde et 4 ou 5 secondes.

On obtient ainsi une alumine active présentant une surface spécifique, mesurée par la méthode BET, comprise entre 200 et 400 m²/g. Sa perte au feu mesurée par calcination à 1000°C varie généralement entre 3 et 15%, ce qui correspond à un rapport molaire H₂O / Al₂O₃ compris entre 0,17 et 0,85.

Cette alumine est aussi de structure amorphe et / ou mal cristallisée. Par amorphe on entend un produit dont l'analyse aux rayons X ne décèle aucune raie caractéristique d'une phase cristalline quelconque. Par mal cristallisé, on entend un produit dont l'analyse aux rayons X donne un diagramme ne présentant qu'une ou quelques raies diffuses correspondant aux phases cristallines des alumines de transition basse température, c'est à dire, essentiellement aux phases chi, rho, êta, gamma.

On peut préciser encore que cette alumine se présente généralement sous la forme d'un produit dont le diamètre des particules est compris entre 0,1 et 300 µm.

Enfin, on peut utiliser plus particulièrement une alumine provenant de la déshydratation rapide d'hydrargillite qui est l'hydroxyde d'aluminium courant du commerce.

L'invention s'applique notamment à la préparation des phosphates pour lesquels le rapport molaire Al / P est au voisinage de ou égal à 1. Elle s'applique aussi à ceux de rapport au moins égal à 1 et plus particulièrement de rapport compris entre 1 et 4.

Pour se faire, on réalise la réaction entre le composé d'aluminium et l'acide phosphorique ou le phosphate d'aluminium dans des conditions telles que l'on obtienne ce rapport c'est à dire en mettant en oeuvre les quantités nécessaires de réactifs.

Après la mise en présence des réactifs, on obtient une suspension.

Il est aussi possible, selon un mode de réalisation particulier de l'invention, d'incorporer une charge à cette suspension.

Généralement cette charge est constituée d'un matériau réfractaire ou d'un mélange de tels matériaux. Comme matériau réfractaire on peut utiliser l'alumine. Cette alumine sera de préférence une alumine peu réactive du type alumine alpha. Ce peut être aussi une argile comme le kaolin, ou encore du quartz, du sable micronisé, de la silice non réactive. On peut encore citer comme matériau réfractaire la magnésie, la dolomie, la magnésie-dolomie, la magnésie-spinelle, la forstérite, la chromite, la chaux, la magnésie-carbone, la dolomie-carbone, la magnésie-dolomie-carbone ainsi que les carbures comme le carbure de silicium ou de tungstène, les nitrures comme les nitrures de silicium ou de bore, les borures, la zircone, le zircon, les silicates d'aluminium ou de zirconium, les oxydes de zinc, de calcium, de magnésium, de titane, d'étain, de fer ou de chrome, l'amiante, le mica et les phosphates d'aluminium. L'utilisation d'une charge permet d'améliorer les propriétés mécaniques des pièces céramiques fabriquées à partir du phosphate d'aluminium de l'invention.

Il est précisé ici que pour le calcul du rapport Al / P mentionné plus haut on ne prend pas en compte la quantité d'aluminium apportée par une charge éventuelle.

Il est à noter enfin que l'ordre d'introduction des réactifs et de la charge peut être quelconque. Notamment, il est possible d'introduire au moins une partie du composé d'aluminium avec la charge ou après celle-ci. La charge doit présenter une granulométrie convenable pour pouvoir être incorporée à la suspension.

Dans une deuxième étape du procédé de l'invention, la suspension précédemment obtenue est séchée par atomisation.

On peut utiliser pour cette atomisation tout appareillage convenable tel qu'atomiseur à turbine ou à buse en fonction notamment de la granulométrie que l'on souhaite obtenir pour le produit sec.

Les températures des gaz pour le séchage peuvent varier dans des gammes larges. Toutefois la température de sortie doit être fixée de manière à conserver le caractère amorphe du phosphate d'aluminium de l'invention. Généralement, cette température sera située entre 60 et 130°C. La température d'entrée pourra être comprise entre 100 et 300°C.

On obtient ainsi à l'issue du séchage par atomisation une poudre dont la granulométrie peut varier entre 10 et 300µm par exemple.

Il est aussi possible, selon un autre mode de réalisation de l'invention, de procéder au séchage par lyophilisation. Les conditions de lyophilisation sont bien connues pour l'homme du métier.

On peut mentionner ici qu'il est éventuellement possible d'ajouter la charge après l'étape de séchage au produit sec obtenu.

Le produit obtenu va maintenant être décrit plus précisément. On entend ici et pour le reste de la description par produit obtenu le phosphate d'aluminium qui résulte de la réaction entre le composé d'aluminium et l'acide phosphorique ou le phosphate d'aluminium. Dans certains cas, le procédé décrit ci-dessus peut donner un mélange comprenant le phosphate selon l'invention et d'autres produits résiduels, cristallisés ou non, tels que des composés de l'aluminium qui n'auraient pas réagi avec l'acide phosphorique ou le phosphate d'aluminium, et ceci en particulier quand le rapport Al/P est supérieur à 1.

Ce produit est un phosphate d'aluminium amorphe. On entend par amorphe un produit dont l'analyse aux rayons X ne décèle aucune raie caractéristique d'une phase cristalline quelconque. Le produit de l'invention n'a pas cristallisé sous forme AlPO₄ notamment. Le caractère amorphe peut aussi être mis en évidence par analyse RMN.

Comme on l'a vu plus haut, le phosphate d'aluminium de l'invention se présente sous forme sèche. Plus précisément, on entend par forme sèche le fait que le phosphate d'aluminium de l'invention ne contient à titre d'eau que de l'eau de constitution.

Selon un autre mode de réalisation de l'invention, le phosphate est amorphe et sa surface spécifique BET est d'au plus 25 m²/g. Plus particulièrement, cette surface est d'au plus 15 m²/g et encore plus particulièrement d'au plus 10 m²/g. Dans certains cas cette surface est d'au plus 5 m²/g. Selon une variante intéressante de ce mode de réalisation, le phosphate se présente aussi sous une forme sèche.

Une autre caractéristique du phosphate de l'invention est son pH. Celui-ci est inférieur à 5 et de préférence d'au plus 4. Les valeurs de pH données ici sont obtenues par mesure dans des suspensions à 1% du produit dans l'eau.

Le phosphate d'aluminium de l'invention, lorsqu'il est chauffé et qu'il commence à perdre son eau de constitution, cristallise sous forme AlPO₄ ce qui conduit à la prise du matériau.

Ce phosphate d'aluminium peut être utilisé dans toute composition convenable, de sorte que l'invention couvre aussi les compositions comprenant un tel phosphate d'aluminium.

Dans le cas particulier où l'on a utilisé une charge dans le procédé de préparation comme décrit plus haut, cette charge se retrouve dans le produit sec de sorte que l'on obtient une composition sous forme d'une poudre comprenant une charge et un phosphate d'aluminium selon l'invention.

Les phosphates d'aluminium ou les compositions de l'invention peuvent être utilisés dans la préparation de matériaux comprenant un liant. Dans ce cas, on utilise un phosphate de l'invention à titre de liant, avec éventuellement une charge, dans un matériau réfractaire qui peut être du même type que celui décrit plus haut. Divers procédés bien connus de l'homme de métier peuvent être utilisés dans lesquels généralement on mélange le phosphate, le réfractaire et de l'eau et on met en forme. On peut ainsi former un mortier à base du réfractaire, du liant et d'eau puis couler dans un moule ce mortier et chauffer. On peut aussi former une barbotine qui est pressée à froid et on soumet ensuite la pièce pressée à un chauffage.

Les phosphates d'aluminium ou les compositions de l'invention peuvent encore être utilisés en tant que tels à la fabrication de matériaux réfractaires notamment par mélange avec de l'eau puis pressage à froid.

Les phosphates d'aluminium ou les compositions de l'invention peuvent être utilisés aussi pour la préparation de pièces céramiques, notamment du type chimiquement liées, à bonne résistance mécanique.

Dans ce cas, on procède généralement en pressant à chaud un phosphate de l'invention avec éventuellement une charge ou, plus généralement une composition comprenant un phosphate de l'invention. La température de pressage est habituellement comprise entre 80 et 400°C.

Les phosphates d'aluminium ou les compositions de l'invention peuvent être utilisés encore comme durcisseur de silicates alcalins notamment, en vue d'applications comme la consolidation des sols ou les ciments. Ils peuvent aussi être employés comme agent de revêtement des métaux pour leur procurer une protection contre la corrosion ou pour l'isolation électrique.

Des exemples vont maintenant être donnés. La valeur de pH qui est donnée dans les exemples a été mesurée dans des suspensions à 1% dans l'eau.

### EXEMPLE 1

On utilise dans cet exemple comme composé de l'aluminium une alumine obtenue par déshydratation rapide d'un hydroxyde d'aluminium et vendue par la société Procatalyse sous le nom Sphéralite 509A.

Cette alumine a les caractéristiques suivantes :
- Perte au feu à 1000°C : 10 %
- Diffraction X : essentiellement amorphe
- Diamètre moyen ( mesuré avec granulométre 850 CILAS ) : 8 µm
- Surface BET : 325 m²/g

Dans un réacteur muni d'un agitateur RAYNERI, on ajoute progressivement 49,1 g d'alumine 509A dans 100 g d'acide phosphorique H₃PO₄ à 85 %. On obtient ainsi une suspension de rapport molaire Al/P = 1, à laquelle on incorpore ensuite un mélange de 100 g d'alumine α (diamètre moyen = 5 µm ) et 49,1 g d'alumine 509A, puis 225,5 g d'eau. Le rapport final Al/P vaut 2, sans compter l'alumine α considérée comme charge.

La suspension est atomisée à l'aide d'un appareil BUCHI "190 mini spray dryer" avec les conditions opératoires suivantes :
- masse de solution atomisée : 476,3 g
- température d'entrée de l'air : 200°C
- température de sortie : 120°C
- débit : 23 ml/mn
- masse de produit récupéré : 213,3 g

La poudre obtenue est d'un bon aspect et ne motte pas. Une analyse par diffraction des rayons X révèle comme seule phase cristallisée l'alumine α de départ (charge), sans cristallisation de AlPO₄. La surface BET est de 4m²/g. Le pH est de 3,0.

La poudre est ensuite pressée sous 1800 kg/cm² et 200°C pendant 4 h dans un moule cylindrique de façon à former une plaquette de diamètre 7 cm, d'épaisseur 0,5 cm. La plaquette est ensuite découpée en barrettes de dimensions approximatives 5x0, 4x0,5 mm³, lesquelles sont testées en flexion 3 points (entraxe 3cm).

La résistance en flexion du matériau vaut 60 MPa, la densité est de 2,5 g/cm³, la porosité de 0,03 ml/g (porosité au mercure) soit 7,5% en volume.

### EXEMPLE 2

On ajoute progressivement 196,7 g d'aluminium 509A dans 200 g de H₃PO₄ à 85 %. On effectue une dilution avec 471 g d'eau. Le rapport Al/P est égal à 2.

On procède à une atomisation sur BUCHI dans les mêmes conditions qu'à l'exemple 1.

On obtient une poudre non collante amorphe aux rayons X . Sa surface BET est de 4,8 m²/g et son pH de 3,0.

On forme ensuite des barrettes comme dans l'exemple 1.

On obtient les résultats suivants :
Densité du matériau : 2,1 g/cm³
Résistance en flexion : 43 MPa

### EXEMPLE 3

On ajoute progressivement 295 g d'alumine 509A dans 200 g d'acide phosphorique à 85%. On dilue avec 956,9 g d'eau. Le rapport Al/P est égal à 3.

On procède à une atomisation comme dans l'exemple 1.

On obtient une poudre amorphe aux rayons X . Sa surface BET est de 2,9 m²/g et le pH de 3,1.

### EXEMPLE 4

On ajoute 98,3 g d'alumine 509A dans 200 g d'acide phosphorique à 85% puis 100 g d'alumine alpha du même type que dans l'exemple 1 en tant que charge et 497,9 g d'eau (une partie de l'eau est ajoutée avec l'alumine 509A pour faciliter le mélange)

On atomise comme dans l'exemple 1.

L'analyse en diffraction X de la poudre obtenue montre la présence d'Al₂O₃ α uniquement. La surface BET de la poudre est de 5m²/g et son pH de 2,6.

### EXEMPLE 5

On ajoute 134,1 g de Al (OH)₃ dans 100 g d'acide phosphorique à 85%. Puis on ajoute 100 g d'Al₂O₃ α et 225 g d'eau. Les caractéristiques de l'hydroxyde d'aluminium utilisé sont les suivantes :
- produit PROLABO ref. 20984298
- perte au feu 1000°C : 34%
- granulométrie : 20µm
- surface BET : < 0,5 m²/g
- diffraction rayons X : cristallisé gibbsite.

On atomise dans les mêmes conditions qu'à l'exemple 1.

Analyse de la poudre obtenue :
- Diffraction X : Al₂O₃ α (charge) et Al(OH)₃ non réagi
- Surface BET : 0,3m²/g
- pH : 2,7

Par analyse thermogravimètrique (Perte de poids caractéristique de Al(OH)₃ vers 350°C), on peut calculer qu'environ la moitié de Al(OH)₃ a réagi avec H₃PO₄, pour former un phosphate amorphe selon l'invention de rapport Al/P égal à 1.

### EXEMPLE 6

32,4g de la suspension préparée à l'exemple 1 est lyophilisée à l'aide d'un appareil ALPHA l-5 CHRISS.

On récupère 17,8g d'une poudre sèche dont les caractéristiques sont les suivantes :
- Surface spécifique : 0,7 m²/g
- pH : 2,7
Par diffraction des rayons X, on identifie comme seule phase cristallisée la charge d'alumine alpha.

### EXEMPLE 7

Cet exemple illustre l'utilisation à titre de liant du phosphate de l'invention.

On réalise le mélange suivant :
- poudre préparée par atomisation dans l'exemple 4 : 5 g
- sable quartzeux de granulométrie moyenne 0,2 mm : 23,8 g
- Eau : 4,2 g

Le mélange obtenu est pressé à température ambiante (20°C) sous 1000 kg/cm² dans un moule parallépipédique de façon à former des éprouvettes de dimensions :
5 cm (longueur) x 0,8 cm (largeur) x 1 cm (hauteur)

L'éprouvette est ensuite séchée à 50°C dans une étuve pendant 1 heure, puis placée dans un four à 200°C pendant 4 heures.

La résistance en compression du matériau obtenu est 25 MPa.

### EXEMPLE 8

Cet exemple illustre l'utilisation d'un phosphate de l'invention dans la préparation d'une céramique.

On réalise une barbotine de rapport pondéral eau/solide = 0,4 avec une poudre préparée comme dans l'exemple 1 mais contenant 50% de charge Al₂O₃ α. Cette barbotine est désagglomérée aux ultra-sons pendant 5 mn. Elle est ensuite coulée dans un moule de plâtre de Paris permettant d'obtenir des barettes de dimensions 5 cm x 1 cm x 1 cm. Ces barettes sont calcinées à 200°C pendant 4 heures. Leur résistance en flexion 3 points vaut 17 MPa en moyenne.

## Revendications

1. Procédé de préparation d'un phosphate d'aluminium, caractérisé en ce qu'on fait réagir au moins une alumine, obtenue par déshydratation rapide des hydroxydes ou oxyhydroxydes d'aluminium, avec de l'acide phosphorique ou un phosphate d'aluminium, le milieu réactionnel ne comprenant pas de sels à l'exception des phosphates d'aluminium, et on sèche par atomisation ou lyophilisation la suspension obtenue.

2. Procédé selon la revendication 1, caractérisé en ce que l'alumine est obtenue par déshydratation rapide d'hydragillite.

3. Procédé selon l'une quelconque des revendications 1 ou 2, caractérisé en ce que la déshydratation rapide est opérée par contact des hydroxydes ou oxyhydroxydes d'aluminium avec un courant de gaz chauds pendant une fraction de seconde à 4 ou 5 secondes, la température d'entrée des gaz varaiant entre 400 et 1200 °C.

4. Procédé selon l'une quelconque des revendications précédentes, caractérisé en ce que l'alumine précitée présente une surface spécifique comprise entre 200 et 400 m²/g.

5. Procédé selon l'une quelconque des revendications précédentes, caractérisé en ce que l'alumine précitée présente une perte au feu mesurée par calcination à 1000 °C comprise entre 3 et 15%.

6. Procédé selon l'une quelconque des revendications précédentes, caractérisé en ce que l'alumine est amorphe et/ou mal cristallisée.

7. Procédé selon l'une quelconque des revendications précédentes, caractérisé en ce que l'alumine se présente sous la forme d'un produit dont le diamètre des particules est compris entre 0,1 et 300 µm.

8. Procédé selon l'une quelconque des revendications précédentes, caractérisé en ce qu'on réalise la réaction précitée dans des conditions telles que le rapport Al/P est d'au moins 1, plus particulièrement compris entre 1 et 4.

9. Procédé selon l'une quelconque des revendications précédentes, caractérisé en ce qu'on incorpore une charge à la suspension précitée ou en ce qu'on mélange une charge au produit obtenu après le séchage.

10. Phosphate d'aluminium susceptible d'être obtenu par le procédé selon l'une des revendications 1 à 9, ledit phosphate étant amorphe et ayant une surface spécifique d'au plus 25 m²/g.

11. Composition caractérisée en ce qu'elle comprend un phosphate d'aluminium susceptible d'être obtenu par le procédé selon l'une quelconque des revendications 1 à 9.

12. Composition selon la revendication 11, caractérisée en ce qu'elle comprend en outre une charge.

13. Composition selon la revendication 11 ou 12, caractérisée en ce que la charge est un matériau réfractaire.

14. Procédé de préparation de pièces céramiques, caractérisé en ce qu'on presse à chaud un phosphate d'aluminium susceptible d'être obtenu par le procédé selon l'une quelconque des revendications 1 à 9 ou une composition selon l'une des revendications 11 à 13.

15. Procédé de préparation de pièces céramiques selon la revendication précédente, caractérisé en ce qu'on presse à une température comprise entre 80 et 400 °C.

16. Utilisation comme liant ou comme durcisseur ou comme agent de revêtement des métaux d'un phosphate d'aluminium susceptible d'être obtenu par le procédé selon l'une quelconque des revendications 1 à 9 ou d'une composition selon l'une des revendications 11 à 13.

## Claims

1. Process for the preparation of an aluminium phosphate, characterized in that at least one alumina, obtained by rapid dehydration of aluminium hydroxides or oxyhydroxides, is reacted with phosphoric acid or an aluminium phosphate, the reaction medium comprising no salts except aluminium phosphates, and the suspension obtained is dried by spraying or freeze-drying.

2. Process according to claim 1, characterized in that the alumina is obtained by rapid dehydration of hydrargillite.

3. Process according to either of claims 1 and 2, characterized in that the rapid dehydration is carried out by placing the aluminium hydroxides or oxyhydroxides in contact with a stream of hot gases for a fraction of a second to 4 or 5 seconds, the inlet temperature of the gases ranging between 400 and 1200°C.

4. Process according to any one of the preceding claims, characterized in that the abovementioned alumina has a specific surface of between 200 and 400 m²/g.

5. Process according to any one of the preceding claims, characterized in that the abovementioned alumina has a loss on ignition, measured by calcination at 1000°C, of between 3 and 15%.

6. Process according to any one of the preceding claims, characterized in that the alumina is amorphous and/or poorly crystalline.

7. Process according to any one of the preceding claims, characterized in that the alumina is in the form of a product whose particle diameter is between 0.1 and 300 µm.

8. Process according to any one of the preceding claims, characterized in that the abovementioned reaction is carried out under conditions such that the Al/P ratio is at least 1, more particularly between 1 and 4.

9. Process according to any one of the preceding claims, characterized in that a filler is incorporated into the abovementioned suspension or in that a filler is mixed into the product obtained after drying.

10. Aluminium phosphate which can be obtained by the process according to one of claims 1 to 9, the said phosphate being amorphous and having a specific surface of not greater than 25 m²/g.

11. Composition, characterized in that it comprises an aluminium phosphate which can be obtained by the process according to any one of claims 1 to 9.

12. Composition according to claim 11, characterized in that it additionally comprises a filler.

13. Composition according to claim 11 or 12, characterized in that the filler is a refractory material.

14. Process for the preparation of ceramic components, characterized in that an aluminium phosphate which can be obtained by the process according to any one of claims 1 to 9 or a composition according to one of claims 11 to 13 is pressed hot.

15. Process for the preparation of ceramic components according to the preceding claim, characterized in that pressing is carried out at a temperature of between 80 and 400°C.

16. Use as binder or as hardener or as metal-coating agent of an aluminium phosphate which can be obtained by the process according to any one of claims 1 to 9 or of a composition according to one of claims 11 to 13.

## Patentansprüche

1. Verfahren zur Herstellung eines Aluminiumphosphats, dadurch gekennzeichnet, daß man mindestens ein Aluminiumoxid, erhalten durch schnelle Dehydratisierung der Aluminiumhydroxide oder -oxidhydroxide, mit Phosphorsäure oder einem Aluminiumphosphat reagieren läßt, wobei das Reaktionsmedium keine Salze mit Ausnahme der Aluminiumphosphate umfaßt, und man die erhaltene Suspension durch Zerstaubung oder Lyophilisation trocknet.

2. Verfahren nach Anspruch 1, dadurch gekennzeichnet, daß das Aluminiumoxid durch schnelle Dehydratisierung von Hydrargillit erhalten wird.

3. Verfahren nach einem der Ansprüche 1 oder 2, dadurch gekennzeichnet, daß die schnelle Dehydratisierung durch Kontakt der Aluminiumhydroxide oder -oxidhydroxide mit einem Strom warmer Gase während eines Sekundenbruchteils bis 4 oder 5 Sekunden ausgeführt wird, wobei die Eintrittstemperatur der Gase zwischen 400 und 1200°C variiert.

4. Verfahren nach einem der vorangegangenen Ansprüche, dadurch gekennzeichnet, daß das genannte Aluminiumoxid eine spezifische Oberfläche zwischen 200 und 400 m²/g aufweist.

5. Verfahren nach einem der vorangegangenen Ansprüche, dadurch gekennzeichnet, daß das genannte Aluminiumoxid einen Glühverlust, gemessen durch Kalzinieren bei 1000°C, zwischen 3 und 15% aufweist.

6. Verfahren nach einem der vorangegangenen Ansprüche, dadurch gekennzeichnet, daß das Aluminiumoxid amorph und/oder schlecht kristallisiert ist.

7. Verfahren nach einem der vorangegangenen Ansprüche, dadurch gekennzeichnet, daß das Aluminiumoxid in Form eines Produkts vorliegt, dessen Teilchendurchmesser zwischen 0,1 und 300 µm liegt.

8. Verfahren nach einem der vorangegangenen Ansprüche, dadurch gekennzeichnet, daß man die genannte Umsetzung unter solchen Bedingungen ausführt, daß das Verhältnis Al/P mindestens gleich 1, insbesondere zwischen 1 und 4 beträgt.

9. Verfahren nach einem der vorangegangenen Ansprüche, dadurch gekennzeichnet, daß man in die genannte Suspension ein Füllmaterial einarbeitet oder man ein Füllmaterial dem nach der Trocknung erhaltenen Produkt zumischt.

10. Aluminiumphosphat, das durch das Verfahren nach einem der Ansprüche 1 bis 9 erhalten werden kann, wobei das Phosphat amorph ist und eine spezifische Oberfläche von höchstens 25 m²/g aufweist.

11. Zusammensetzung, dadurch gekennzeichnet, daß sie ein Aluminiumphosphat umfaßt, das durch das Verfahren nach einem der Ansprüche 1 bis 9 erhalten werden kann.

12. Zusammensetzung nach Anspruch 11, dadurch gekennzeichnet, daß sie darüberhinaus ein Füllmaterial enthält.

13. Zusammensetzung nach Anspruch 11 oder 12, dadurch gekennzeichnet, daß das Füllmaterial ein feuerfestes Material ist.

14. Verfahren zur Herstellung keramischer Teile, dadurch gekennzeichnet, daß man ein Aluminiumphosphat, das durch das Verfahren nach einem der Ansprüche 1 bis 9 erhalten werden kann, oder eine Zusammensetzung nach einem der Ansprüche 11 bis 13 heißpreßt.

15. Verfahren zur Herstellung keramischer Teile nach dem vorangegangenen Anspruch, dadurch gekennzeichnet, daß man das Pressen bei einer Temperatur zwischen 80 und 400°C vornimmt.

16. Verwendung eines Aluminiumphosphats, das durch das Verfahren nach einem der Ansprüche 1 bis 9 erhalten werden kann, oder einer Zusammensetzung nach einem der Ansprüche 11 bis 13 als Bindemittel oder als Härtemittel oder als Überzugsmaterial für Metalle.
